# EUROPÄISCHE PATENTSCHRIFT

(11) **EP 2 852 876 B1**
(45) Veröffentlichungstag und Bekanntmachung des Hinweises auf die Patenterteilung: **13.07.2016**
(21) Anmeldenummer: 13725070.0
(22) Anmeldetag: 16.05.2013
(51) Int. Cl.: G06F 3/01, B60K 37/00, B60K 37/06

(54) **SYSTEM UND VERFAHREN ZUR STEUERUNG VON ZUMINDEST EINEM FAHRZEUGSYSTEM MITTELS VON EINEM FAHRER DURCHGEFÜHRTER GESTEN**
SYSTEM AND METHOD FOR CONTROLLING A VEHICLE SYSTEM BY DRIVER GESTURES
SYSTEME ET PROCEDE DE COMMANDE D'UN SYSTÈME DE VEHICULE PAR DES GESTES DU PILOTE

(30) Priorität: 22.05.2012 DE 102012010001; 14.09.2012 DE 102012018685
(43) Veröffentlichungstag der Anmeldung: 01.04.2015
(73) Patentinhaber: Audi AG, 85045 Ingolstadt (DE)
(72) Erfinder: KÜHNE, Marcus, 85051 Ingolstadt (DE); SCHNEIDER, Johann, 85139 Wettstetten (DE); MÜLLER, Ulrich, 85055 Ingolstadt (DE); WENZL, Fritz, 81675 München (DE); WACKER, Philip, Yannie, 81669 München (DE); LENKER, Thomas, Maximilian, 82362 Weilheim (DE); KERSCHBAUM, Philipp, Johannes, 80496 München (DE)
(74) Vertreter: Brandt, Kai
(86) Internationale Anmeldenummer: PCT/EP2013/001450
(87) Internationale Veröffentlichungsnummer: WO 2013/174494

(56) Entgegenhaltungen:
- DE-A1-102006 024 252
- US-A1- 2009 287 361

## Beschreibung

Die vorliegende Erfindung umfasst ein System und ein Verfahren zur Steuerung von zumindest einem Fahrzeugsystem mittels von einem Fahrer durchgeführter Gesten.

Moderne Kraftfahrzeuge weisen eine Vielzahl an Fahrzeugsystemen auf, deren Einstellungen oftmals individuell an die Wünsche eines Fahrers angepasst werden können. Es ist bekannt, dass derartige Einstellungen mittels Drehschaltern, Dreh-Drückschaltern oder auch berührungsempfindlichen Bildschirmen im Bereich des Armaturenbretts oder der Mittelkonsole eines Kraftfahrzeugs vorgenommen werden können.

Die Bedienung derartiger Schalter oder Bildschirme während des Betriebs des Kraftfahrzeugs ist mit einer zumindest gewissen Ablenkung des Fahrers vom Fahrergeschehen verbunden und kann daher Ursache von Unfällen sein.

Vor diesem Hintergrund sind Vorrichtungen und Verfahren entwickelt worden, mit denen Fahrzeugsysteme ein- bzw. verstellt werden können, ohne dass ein Fahrer Schalter oder Bildschirme im Bereich des Armaturenbretts oder der Mittelkonsole bedienen muss. Hierdurch soll die Ablenkung des Fahrers vom Fahrergeschehen während der Ein- bzw. Verstellung von Fahrzeugsystemen verringert werden.

So beschreibt die GB 2 423 808 A ein Steuerungssystem zum Fernsteuern von einer oder mehreren Vorrichtungen. Das Steuerungssystem enthält eine empfindliche Fläche zum Nachweisen der Nähe einer Hand an einer Mehrzahl an über die Fläche verteilten Punkten, einen Speicher mit einer Gestenbibliothek, ein Gestenerkennungsmodul zum Identifizieren und Erkennen von Bewegungen der Hand auf Grundlage der in der Gestenbibliothek gespeicherten Gesten, und eine Steuerungseinrichtung zum Steuern des Betriebs von einer der Vorrichtungen entsprechend den Handbewegungen, die von einem Bediener über der empfindlichen Fläche ausgeführt werden. Die empfindliche Fläche kann eine Anordnung an kapazitiven Messsonden aufweisen, die auf einer dielektrischen Komponente angeordnet sind, wobei jede Messsonde mit einer Grenzwertschaltung verbunden ist, wodurch unabhängig voneinander die Empfindlichkeit einer jeden Messsonde eingestellt werden kann. Die dielektrische Komponente kann eine laminierte Lichtaustrittsöffnung und eine Windschutzscheibe sein. Es kann eine Sendeelektrode vorgesehen sein, die in der Nähe eines Lenkrads angeordnet ist. Es kann ein Head-up-Display oder ein Anzeigebildschirm vorgesehen sein, um die Geste zum Steuern einer jeden Vorrichtung anzuzeigen. Es kann ein Lautsprecher vorgesehen sein, um ein hörbares Feedback zur Verfügung zu stellen. Die Vorrichtung kann eine Auto-Klimaanlage, ein Radio oder Navigationssystem sein.

Es ist vorgesehen, dass die empfindliche Fläche zum Nachweisen der Nähe einer Hand gemäß GB 2 423 808 A im Armaturenbrett im Bereich zwischen dem Fahrer- und Beifahrersitz angeordnet ist. Zur Bedienung des Systems muss der Fahrer daher zwingend eine Hand vom Lenkrad entfernen. Des Weiteren sieht diese Druckschrift eine Mehrzahl an verschiedenen Gesten vor, die von einem Fahrer erlernt werden muss, wodurch bei der Bedienung des Systems ein vergleichsweise hoher Konzentrationsgrad erforderlich ist, wodurch gleichzeitig die Gefahr einer nicht unwesentlichen Ablenkung des Fahrers gegeben sein wird.

Aus der DE 10 2006 024 252 A1 ist ein Fahrzeugcockpit mit einem Fahrzeuglenkrad bekannt, das eine einem Anwender zugängliche Lenkradaußenfläche aufweist, wobei das Lenkrad derart ausgebildet ist, dass über dieses Fingerbewegungen auf der Lenkradaußenfläche erfassbar sind; mit einer Auswertungsschaltung zur Generierung von Auswertungssignalen, die als solche mit der Fingerbewegung und der Position des Fingers auf dem Lenkrad im Zusammenhang stehen, und mit einem Slavesystem, das nach Maßgabe eines Ansteuersignals angesteuert wird, wobei das an Steuersignal auf Grundlage der Auswertungssignale generiert wird.

Gemäß dieser Offenlegungsschrift ist die Lenkradaußenfläche in Form einer Touchpadstruktur ausgebildet, auf der durch eine Drehung des Daumens und/oder durch Knicken oder Strecken des Daumens ein gewisser Oberflächenbereich überstrichen werden kann. Auch diese Form der Steuerung von Fahrzeugsystemen erfordert eine vergleichsweise große Konzentration durch den Fahrer, wodurch gleichzeitig die Gefahr einer zu großen Ablenkung des Fahrers vom Fahrergeschehen gegeben sein kann.

Die DE 10 2010 026 291 A1 beschreibt ein Kraftfahrzeug mit einem Lenkrad, wobei das Kraftfahrzeug ein erstes, in das Lenkrad integriertes Touchpad zur Eingabe von Befehlen, ein zweites, räumlich von dem ersten Touchpad getrennt in das Lenkrad integriertes Touchpad zur Eingabe von Befehlen und ein Koordinationsmodul zur Erzeugung eines Befehls zur Bedienung einer Funktion des Kraftfahrzeugs in Abhängigkeit einer berührenden Bewegung über das erste Touchpad und einer gleichzeitig erfolgenden berührenden Bewegung über das zweite Touchpad umfasst.

Die technische Lehre dieser Offenlegungsschrift weist ähnliche Nachteile auf wie die in Bezug auf die DE 10 2006 024 252 A1 erwähnten.

Die DE 10 2007 035 769 A1 hat ein Kraftfahrzeugcockpit mit einer Mehrzahl an Anzeigeeinheiten zur Darstellung von Informationen zum Gegenstand, wobei die Anzeigeeinheiten an unterschiedlichen Positionen im Innenraum des Kraftfahrzeugs angeordnet sind. Durch eine Steueranordnung sind die Art und der Inhalt der jeweils an einer Anzeigeeinheit dargestellten Information steuerbar. Von einem Aufnahmemittel ist eine Zuordnung eines Gliedes eines Benutzers zu einer ersten Anzeigeeinheit sowie eine gestigabhängige Veränderung der Zuordnung zu einer weiteren Anzeigeeinheit berührungslos erfassbar und die Information der Änderung der Zuordnung der Steueranordnung zuleitbar und von der Steueranordnung entsprechend der Änderung der Zuordnung die weitere Anzeigeeinheit zur Darstellung der Information der ersten Anzeigeeinheit ansteuerbar.

Auch die technische Lehre dieser Offenlegungsschrift setzt voraus, dass der Fahrer während der Bedienung eine Hand vom Lenkrad entfernt, wodurch während dieser Zeit die Möglichkeiten zur Bedienung des Lenkrads in nachteiliger Weise nur eingeschränkt vorhanden sind.

Und aus der US 2009/0287361 A1 ist ein Befehlseingabesystem bekannt, das aufweist: 1) eine Infrarotkamera zum Aufnehmen eines Bildes eines Erfassungsbereichs, in dem ein bestimmter Teil als Hintergrund definiert ist; 2) eine Extraktionseinrichtung zum Extrahieren auf Grundlage von Bilddaten des von der Infrarotkamera aufgenommenen Bildes von a) einer Handhaltung und/oder b) einer Bewegung einer Hand; und 3) eine Temperatureinstelleinrichtung zum Einstellen der Temperatur der Hand und/oder der Temperatur des Hintergrunds, um die Differenz zwischen der Temperatur der Hand und der Temperatur des Hintergrunds zu vergrößern.

Es ist Aufgabe der vorliegenden Erfindung, die Bedienung eines Kraftfahrzeugs zu verbessern bzw. zu vereinfachen.

Diese Aufgaben werden gelöst durch das System zur Steuerung von zumindest einem Fahrzeugsystem mittels von einem Fahrer durchgeführter Gesten gemäß Anspruch 1, sowie das Verfahren zur Steuerung von zumindest einem Fahrzeugsystem mittels von einem Fahrer durchgeführter Gesten gemäß Anspruch 5. Vorteilhafte Weiterbildungen des Systems bzw. des Verfahrens sind Gegenstand der Unteransprüche.

Dementsprechend wird ein System zur Steuerung von zumindest einem Fahrzeugsystem mittels von einem Fahrer durchgeführter Gesten vorgeschlagen, wobei das System zumindest eine erste Sensoreinrichtung umfasst, deren Erfassungsbereich derart ausgestaltet ist, dass durch ihn das Ausstrecken von zumindest einem Finger von zumindest einer sich am Lenkradkranz eines Lenkrades befindlichen Hand eines Fahrers erfasst werden kann, zumindest eine Auswertungseinrichtung, durch die die Bewegung(en) des zumindest einen Fingers ausgewertet werden kann/können, und zumindest eine Steuerungseinrichtung, durch die ein Steuerbefehl für zumindest ein Fahrzeugsystem auf Grundlage der Auswertung durch die Auswertungseinrichtung erzeugt und an zumindest ein Fahrzeugsystem übertragen werden kann.

Das erfindungsgemäße System ist dadurch gekennzeichnet, dass es weiter zumindest eine zweite, im Bereich des Lenkradkranzes angeordnete Sensoreinrichtung aufweist, mittels der erfasst werden kann, ob sich die zumindest eine Hand des Fahrers am Lenkradkranz befindet, und der Steuerbefehl für zumindest ein Fahrzeugsystem durch die Steuereinrichtung nur erzeugt und an dieses übertragen wird, wenn mittels zumindest der zweiten, im Bereich des Lenkradkranzes angeordneten Sensoreinrichtung erfasst wird, dass sich die zumindest eine Hand des Fahrers am Lenkradkranz befindet.

Das erfindungsgemäße System weist somit die Vorteile auf, dass es zur Steuerung eines Fahrzeugsystems lediglich eine einfache Bewegung von im einfachsten Fall nur einem Finger einer Hand eines Fahrers erfordert, wobei der Fahrer die Hand nicht vom Lenkradkranz entfernt.

Gemäß einer ersten vorteilhaften Weiterbildung weist das System als die erste Sensoreinrichtung zumindest eine Kameraeinrichtung auf. Gemäß einer zweiten vorteilhaften Weiterbildung ist die erste Sensoreinrichtung im Bereich der Lenksäule oder des Armaturenbretts angeordnet.

Ebenso ist es von Vorteil wenn die erste Sensoreinrichtung derart angeordnet ist, dass diese der Drehung des Lenkrads folgt.

Die vorliegende Erfindung umfasst auch ein Verfahren zur Steuerung von zumindest einem Fahrzeugsystem mittels von einem Fahrer durchgeführter Gesten, wobei mittels einer ersten Sensoreinrichtung, deren Erfassungsbereich derart ausgestaltet ist, dass durch sie das Ausstrecken von zumindest einem Finger von zumindest einer sich am Lenkradkranz eines Lenkrades befindlichen Hand eines Fahrers erfasst werden kann, erfasst wird, ob ein Fahrer zumindest einen Finger einer sich am Lenkradkranz befindlichen Hand ausstreckt und gegebenenfalls wieder beugt, für den Fall, dass der Fahrer zumindest einen Finger ausstreckt und gegebenenfalls wieder beugt, durch eine Auswertungseinrichtung, durch die die Bewegung(en) des zumindest einen Fingers ausgewertet werden kann/können, die Bewegung(en) des zumindest einen Fingers des Fahrers ausgewertet wird/werden, und durch eine Steuerungseinrichtung, durch die ein Steuerbefehl für ein Fahrzeugsystem auf Grundlage der Auswertung durch die Auswertungseinrichtung erzeugt und an das Fahrzeugsystem übertragen werden kann, ein Steuerbefehl für zumindest ein Fahrzeugsystem erzeugt und an dieses übertragen wird.

Das erfindungsgemäße Verfahren ist dadurch gekennzeichnet, dass der Steuerbefehl für zumindest ein Fahrzeugsystem nur erzeugt und an dieses übertragen wird, wenn mittels zumindest einer zweiten, im Bereich des Lenkradkranzes angeordneten Sensoreinrichtung erfasst wird, dass sich die zumindest eine Hand des Fahrers am Lenkradkranz befindet.

Gemäß einer ersten vorteilhaften Weiterbildung umfasst das Fahrzeugsystem eine Anzeigeeinrichtung, eine Multimediaeinrichtung, eine Navigationseinrichtung, eine Fahrerassistenzeinrichtung, eine Kommunikationseinrichtung, oder eine Fahrzeugeinstelleinrichtung.

Weiter ist es vorteilhaft, wenn das Fahrzeugsystem eine Anzeigeeinrichtung umfasst, und mittels eines Fingerzeigs eines Fingers der rechten oder eines Fingers der linken Hand ein von der Anzeigeeinrichtung darstellbares Menü durchgeschaltet werden kann. Und in vorteilhafter Weise kann erreicht werden, dass mittels eines Fingerzeigs von zumindest zwei Fingern eine Menüoption ausgewählt oder aktiviert werden kann.

Die vorliegende Erfindung wird anhand der beigefügten Zeichnungen näher erläutert.

Dabei zeigen:
- Fig. 1:: eine Ansicht eines Teils des erfindungsgemäßen Systems
- Fig. 2:: eine Draufsicht auf einen Lenkradkranz mit einem beispielhaft angedeuteten linken und rechten Sensorbereich.

Die Darstellungen in den Figuren sind rein schematisch und nicht maßstabsgerecht. Innerhalb der Figuren sind gleiche oder ähnliche Elemente mit gleichen Bezugszeichen versehen.

Die nachfolgend erläuterten Ausführungsbeispiele stellen bevorzugte Ausführungsformen der vorliegenden Erfindung dar. Die vorliegende Erfindung ist selbstverständlich nicht auf diese Ausführungsformen beschränkt.

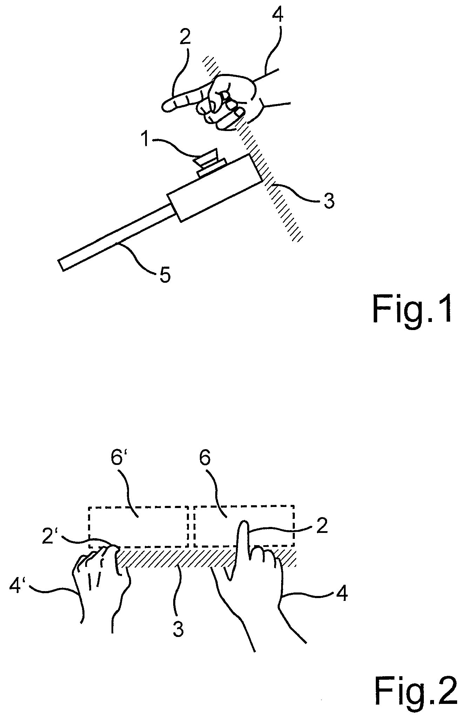

Fig. 1 stellt eine Ansicht eines Teils des erfindungsgemäßen Systems zur Steuerung von zumindest einem Fahrzeugsystem mittels von einem Fahrer durchgeführter Gesten dar. Das System umfasst zumindest eine erste Sensoreinrichtung 1, deren Erfassungsbereich derart ausgestaltet ist, dass durch sie das Ausstrecken von zumindest einem Finger 2 von zumindest einer sich am Lenkradkranz 3 eines Lenkrades befindlichen Hand 4 eines Fahrers erfasst werden kann. Daneben - in der Fig. 1 nicht gezeigt - weist das System zumindest eine Auswertungseinrichtung auf, durch die die Bewegung(en) des zumindest einen Fingers 2 ausgewertet werden kann/können, und zumindest eine Steuerungseinrichtung, durch die ein Steuerbefehl für zumindest ein Fahrzeugsystem auf Grundlage der Auswertung durch die Auswertungseinrichtung erzeugt und an zumindest ein Fahrzeugsystem übertragen werden kann.

Bei der ersten Sensoreinrichtung 1 kann es sich um jede geeignete Einrichtung handeln, wie beispielsweise eine Kameraeinrichtung, mit der zweidimensionale oder auch dreidimensionale Bilder erfasst werden können. Die Kameraeinrichtung kann dabei eine sein, die Bilder auf Grundlage des für das menschliche Auge sichtbaren Lichts erfasst, aber selbstverständlich auch eine Kameraeinrichtung, die Bilder auf Grundlage des für das menschliche Auge nicht sichtbaren Lichts (zum Beispiel Infrarotlicht) erfasst. Die Erfassung durch die erste Sensoreinrichtung 1 ist nicht auf einen bestimmten Bereich innerhalb des elektromagnetischen Spektrums beschränkt und kann selbstverständlich auch auf allen anderen möglichen Formen der Erfassung beruhen (zum Beispiel Schallwellen, Magnetfeldern, elektrischen Feldern etc.). Es ist lediglich erforderlich, dass die Erfassung der Bewegung des zumindest einen Fingers 2 durch die erste Sensoreinrichtung 1 mit einer für den erfindungsgemäßen Zweck ausreichenden räumlichen oder flächenmäßigen Auflösung und zeitlicher Geschwindigkeit (zum Beispiel im Bereich von 15 bis 40 Erfassungen pro Sekunde) erfolgen kann.

Der Erfassungsbereich der ersten Sensoreinrichtung 1 ist derart ausgestaltet, dass durch ihn das Ausstrecken von zumindest einem Finger 2 von zumindest einer sich am Lenkradkranz 3 eines Lenkrades befindlichen Hand 4 eines Fahrers erfasst werden kann. Ausgehend von einer normalen Sitzhaltung eines Fahrers umgreifen dessen Hände 4 den Lenkradkranz 3 eines Lenkrads derart, dass bei einem Ausstrecken von zum Beispiel dem Zeigefinger 2 einer Hand 4, dieser Finger 2 im Wesentlichen in Richtung des Armaturenbretts des Fahrzeugs weist und zumindest ein Teil des Fingers 2 sich in dem Bereich zwischen dem dem Armaturenbrett zugewandten Ende des Lenkradkranzes und dem Armaturenbrett befindet.

Daher wird der Erfassungsbereich der ersten Sensoreinrichtung 1 in der Regel so ausgestaltet sein, dass er einen Bereich des vom Fahrer aus gesehen hinteren Endes des Lenkradkranzes 3 sowie mehrere Zentimeter (zum Beispiel 5 cm, 6 cm, 7 cm, 8 cm, 9 cm oder 10 cm) des sich daran in Richtung des Armaturenbretts (oder bei sehr flach stehenden Lenkrädern im Wesentlichen in Richtung des Fahrzeugbodens) anschließenden Raums umfasst. Des Weiteren wird der Erfassungsbereich in Richtung der durch den Lenkradkranz im Wesentlichen aufgespannten Ebene (Kreisfläche), deren Zentrum oftmals die gedachte Verlängerung der Lenkachse bildet, in etwa einen Radius aufweisen, der zum Beispiel 2 cm, 3 cm, 4 cm oder 5 cm größer ist als der äußere Radius des Lenkradkranzes. Dies deshalb, da bei einer normalen Handhaltung am Lenkradkranz und einem Ausstrecken von Fingern 2, diese Finger 2 sich außerhalb des durch das äußeren Ende des Lenkradkranzes 3 vorgegebenen Radius befinden.

Grundsätzlich kann die erste Sensoreinrichtung 1 derart ausgestaltet sein, dass ihr Erfassungsbereich den oben erwähnten Bereich im gesamten Umfang des Lenkradkranzes erfasst. Ausgehend von der Annahme, dass ein Lenkrad im Wesentlichen kreisförmig ausgebildet ist, würde hierbei auch der Erfassungsbereich der ersten Sensoreinrichtung 1 einen zylinderförmigen oder hohlzylinderförmigen Bereich ab dem hinteren Ende des Lenkradkranzes 3 umfassen. Um einen solchen zylinderförmigen oder hohlzylinderförmigen Bereich erfassen zu können, kann beispielsweise vorgesehen sein, dass die erste Sensoreinrichtung 1 mehrere (2, 3, 4, 5 oder mehr) Sensoreinheiten (Kameraeinheiten) aufweist, die beispielsweise in einer geeigneten Ebene quer zur Längsachse im Wesentlichen kreisförmig um die Lenksäule 5 herum oder in geeigneten Bereichen des Armaturenbretts angeordnet sind. Die Erfassungswinkel einer jeden Sensoreinheit (Kameraeinheit) wird dabei so groß gewählt werden, dass die Erfassungsbereiche von benachbarten Sensoreinheiten (Kameraeinheiten) zumindest aneinander angrenzen oder sich in ihrem jeweiligen Randbereich überlappen.

Der Erfassungswinkel der ersten Sensoreinrichtung 1 kann jedoch auch kleiner als 360° bzw. eines vollen Kreises ausgebildet sein. Unter Sicherheitsaspekten wird unter dem Schlagwort "Viertel vor Drei" eine Handhaltung am Lenkrad empfohlen, bei der ein Fahrer, ohne das Lenkrad loslassen zu müssen, dieses ohne Weiteres um 180° drehen kann. Bei dieser empfohlenen Handhaltung umfassen die Hände eines Fahrers jeweils im Wesentlichen symmetrisch angeordnet einen Bereich innerhalb des oberen rechten und linken Viertels des Lenkradkranzes. Der Erfassungswinkel der ersten Sensoreinrichtung 1 kann daher auch so ausgebildet sein, dass er lediglich einen entsprechenden Bereich (Teilzylinderform oder Teilhohlzylinderform) erfasst.

Der Erfassungswinkel kann also beispielsweise 180°, 170°, 160°, 150°, 140°, 130° oder 120° betragen.

Für den Fall, dass die erste Sensoreinrichtung 1 derart angeordnet ist, dass ihr Erfassungswinkel einen festen Bereich oberhalb der Lenksäule 5 umfasst, besteht die Möglichkeit, dass Bewegungen der Finger 2 des Fahrers, beispielsweise bei einer Kurvenfahrt oder bei einer nicht optimalen Handhaltung des Fahrers nicht oder nicht vollständig erfasst werden können. Um dies zu verhindern, kann in vorteilhafter Weise vorgesehen sein, dass die erste Sensoreinrichtung 1 in Bezug auf die Bewegung des Lenkrads im Wesentlichen drehfest ausgebildet ist, d.h. dass sich die erste Sensoreinrichtung 1 im Wesentlichen synchron mit dem Lenkrad mitdreht.

Andererseits kann der Erfassungsbereich der ersten Sensoreinrichtung 1 aber auch bewusst nur einen festen Bereich oberhalb der Lenksäule 5 umfassen. Hierdurch kann sichergestellt werden, dass das erfindungsgemäße System nur in Situationen bedient werden kann, in denen der Fahrer zum einen eine optimale Handhaltung am Lenkrad eingenommen hat und gleichzeitig keine oder doch zumindest keine starke Kurvenfahrt gegeben ist. Eine Kurvenfahrt erfordert oftmals eine erhöhte Aufmerksamkeit eines Fahrers, so dass eine Bedienung des erfindungsgemäßen Systems in einer solchen Situation unter Sicherheitsaspekten nachteilig sein könnte.

Umfasst der Erfassungsbereich der ersten Sensoreinrichtung 1 nur den oben geschilderten zylinderförmigen, teilzylinderförmigen, hohlzylinderförmigen oder teilhohlzylinderförmigen Bereich, besteht bereits eine hohe Wahrscheinlichkeit dafür, dass nur die Bewegung eines Fingers 2, 2' erfasst wird, wobei sich die zugehörige Hand 4, 4' am Lenkradkranz 3 befindet.

Auch unter Sicherheitsaspekten weist das erfindungsgemäße System weiter zumindest eine zweite, im Bereich des Lenkradkranzes angeordnete Sensoreinrichtung auf, mittels der erfasst werden kann, ob sich die zumindest eine Hand des Fahrers am Lenkradkranz befindet. Diese zweite Sensoreinrichtung ist in den Figuren nicht dargestellt. Bei dieser zweiten Sensoreinrichtung kann es sich um jede für den vorgesehenen Zweck geeignete Einrichtung handeln, beispielsweise eine Sensoreinrichtung, mit der ein von einer Hand auf eine Oberfläche ausgeübter Druck oder mit der der Kontakt von Haut auf einer Oberfläche detektiert werden kann.

Durch eine derartige zweite Sensoreinrichtung wird erfindungsgemäß sichergestellt, dass das erfindungsgemäße System nur dann bedienbar ist, wenn die Hand 4, von der die Bewegung von zumindest einem Finger 2 erfasst werden soll, sich auch am Lenkradkranz 3 befindet. Hierdurch wird - im Gegensatz zum Stand der Technik - in jedem Fall sichergestellt, dass der Fahrer, beispielsweise bei einer plötzlichen auftretenden, unerwarteten Verkehrssituation rasch eine ausweichende Lenkbewegung machen kann. Des Weiteren kann durch diese vorteilhafte Weiterbildung in vielen Fällen ein vom Fahrer nicht beabsichtigtes Verhalten bzw. eine nicht beabsichtigte Reaktion des erfindungsgemäßen Systems aufgrund von Handbewegungen des Fahrers, beispielsweise während einer Unterhaltung, vermieden werden.

In Bezug auf die bei dem erfindungsgemäßen System vorgesehenen Auswertungs- und Steuerungseinrichtungen kann es sich um jede hierfür geeignete Einrichtung handeln. So kann beispielsweise eine Auswertungseinrichtung ein Bildauswertungssystem umfassen, bei dem von der ersten Sensoreinrichtung 1 erfasste Bilder mittels einer geeigneten Kombination aus Hard-(Computer, digitale Recheneinrichtung) und Software (Bildauswertungs-Software) ausgewertet werden. Und bei der Steuerungseinrichtung kann es sich ebenfalls um eine geeignete Kombination aus Hard- und Software handeln, mittels der auf Grundlage der Ergebnisse der Auswertungseinrichtung ein Steuersignal für ein Fahrzeugsystem erzeugt und an dieses übertragen werden kann. Die Auswertungs- und Steuerungseinrichtung können als getrennte Bauelemente/Baugruppen oder als ein gemeinsames Bauelement bzw. gemeinsame Baugruppe des erfindungsgemäßen Systems ausgebildet sein.

Fig. 2 zeigt eine Draufsicht auf einen Lenkradkranz 3 mit einem beispielhaft dargestellten rechten 6 und linken 6' Sensorbereich.

Wie in Fig. 2 gezeigt ist, kann das erfindungsgemäße System selbstverständlich derart ausgebildet sein, dass die Bewegung von wenigstens einem Finger 2, 2' der rechten oder der linken Hand 4, 4' oder die Bewegung von wenigsten einem Finger 2, 2' von sowohl der rechten als auch der linken Hand 4, 4' erfasst werden kann. Hierzu kann entweder die erste Sensoreinrichtung 1 so ausgebildet sein, dass sie nur einen eher rechtsseitigen Bereich 6 oder einen eher linksseitigen Bereich 6' erfasst oder getrennt voneinander beide Bereiche 6, 6'. Auch kann vorgesehen sein, dass durch die erste Sensoreinrichtung 1 beide Bereiche 6, 6' erfasst werden, und dass eine Auswahl der Bereiche 6, 6' erst durch die - in den Figuren nicht dargestellte - Auswertungseinrichtung erfolgt. Durch die Auswertungseinrichtung kann beispielsweise nicht nur ein bestimmter Bereich aus dem Erfassungsbereich der zumindest einen ersten Sensoreinrichtung 1 ausgewählt werden, sondern diese kann auch derart ausgebildet sein, dass erkannt werden kann, ob die erfassten Bewegungen der Finger 2, 2' solche der rechten, der linken oder beider Hände 4, 4' sind.

Das erfindungsgemäße System kann in einem einfachsten Fall so ausgebildet sein, dass es nur die Bewegung von einem Finger 2, 2' einer Hand 4, 4' erfasst und auswertet, also zum Beispiel das Ausstrecken eines Fingers 2 der rechten Hand 4. Hiermit wären jedoch grundsätzlich lediglich eine sehr eingeschränkte Anzahl an unterschiedlichen Zuständen unterscheidbar. Eine solche eingeschränkte Anzahl an unterschiedlichen Zuständen kann jedoch ausreichend sein, wenn beispielsweise mit Hilfe des erfindungsgemäßen Systems lediglich einige wenige Steuerbefehle für ein oder wenige Fahrzeugsysteme (mit denen grundsätzlich jede geeignete Funktion des Kraftfahrzeugs oder innerhalb des Kraftfahrzeugs beispielsweise angezeigt, gesteuert, ein- oder verstellt, eingeschaltet oder ausgeschaltet werden können) erzeugt und an dieses übertragen werden sollen (z.B. Veränderung der Lautstärke des Autoradios, Annahme eines Telefonats von einem Mobiltelefon).

In vielen Fällen wird es jedoch erwünscht sein, dass durch das erfindungsgemäße System die Bewegung von mehreren Fingern 2, 2' erfasst und ausgewertet werden können. Daher kann vorgesehen sein, dass durch das System die Bewegungen (Ausstrecken, Beugen) von bis zu zwei Fingern (Zeigefinger 2, 2'; Mittelfinger) einer jeden Hand 4, 4' erfasst und ausgewertet werden können.

Hierzu bedarf es in der Regel auch keiner Anpassung des Erfassungsbereichs der ersten Sensoreinrichtung 1. Das Beugen eines Fingers 2, 2' erfolgt innerhalb des gleichen räumlichen Bereichs, in dem auch das Ausstrecken des Fingers 2, 2' erfolgt. Und die Größe des Erfassungsbereichs der ersten Sensoreinrichtung 1 wird in aller Regel so großzügig bemessen sein, dass auch das Ausstrecken und gegebenenfalls Beugen von zwei benachbarten Fingern erfasst werden kann. Erforderlichenfalls wird der Erfassungsbereich der ersten Sensoreinrichtung 1 entsprechend den Erfordernissen angepasst bzw. ausgelegt werden.

Für einen Fahrer ist es am einfachsten, wenn er mit einer Hand, die einen Lenkradkranz 3 umfasst, lediglich den Zeigefinger 2, 2' dieser Hand ausstreckt und gegebenenfalls wieder beugt. Ohne das Lenkrad loslassen zu müssen ist es jedoch auch möglich, dass ein Fahrer sowohl den Zeigefinger 2, 2' als auch den Mittelfinger einer Hand ausstreckt und gegebenenfalls wieder beugt. Mit ein wenig Übung ist es sogar möglich, dass der Fahrer lediglich den Mittelfinger streckt und wieder beugt, während alle anderen Finger den Lenkradkranz 3 weiter umfassen, oder dass ein Fahrer beim Ausstrecken von Zeige- und Mittelfinger diese V-förmig spreizt.

Auf diese Weise lässt sich bereits mit nur einer Hand die Anzahl an möglichen Gesten vervielfachen, die vom erfindungsgemäßen System erfass- und auswertbar sind. Dies gilt umso mehr, wenn die möglichen Bewegungen von Zeige- und Mittelfinger beider Hände durch das erfindungsgemäße System erfasst und ausgewertet werden.

Vorrangiges Ziel der vorliegenden Erfindung ist es jedoch, mittels einfacher und von einem Fahrer leicht erlernbarer Gesten erreichbare Steuerung von zumindest einem Fahrzeugsystem zu erreichen, mit der nur eine geringe, tolerierbare Ablenkung des Fahrers vom Fahrgeschehen verbunden ist.

Erfindungsgemäß kann es daher vorgesehen sein, dass das erfindungsgemäße System jeweils nur die Bewegung von einem Finger je einer Hand erfasst und auswertet bzw. ein Steuern eines Fahrzeugsystems nur Bewegungen jeweils eines Finger einer Hand erfordert (der rechten Hand, der linken Hand, abwechselnd der rechten und der linken Hand, oder die gleichzeitige, möglichst synchrone Bewegung von je dem gleichen Finger, z.B. Zeigefinger, je einer Hand). Selbstverständlich ist die vorliegende Erfindung nicht auf derartige "einfache" Fingerbewegungen beschränkt und es können je nach Bedarf und/oder Können des Fahrers auch kompliziertere Bewegungen und Bewegungsabläufe von Fingern einer oder beider Hände erfasst und ausgewertet werden.

Es gibt keine besonderen Einschränkungen in Bezug auf das Fahrzeugsystem, an das mittels des erfindungsgemäßen Systems ein Steuerbefehl gesandt werden kann. Beispielsweise kann das Fahrzeugsystem eine Anzeigeeinrichtung (z.B. Display im Bereich des Armaturenbretts, der Mittelkonsole, im Bereich hinter dem Lenkrad, Head-up-Display), eine Multimediaeinrichtung (z.B. Autoradio, Videoeinrichtung, Kameraeinrichtung), eine Navigationseinrichtung, eine Fahrerassistenzeinrichtung (z.B. Fahrstil- oder adaptiver Fernlichtassistent), eine Kommunikationseinrichtung (Mobiltelefon, Einrichtung für mobiles Internet), oder eine Fahrzeugeinstelleinrichtung (Klimaanlage, Heizung, Sitzposition, Spiegeleinstellung, etc.) umfassen.

In vorteilhafter Weise kann das erfindungsgemäße System beispielsweise dazu verwendet werden, ein in einer von einer Anzeigeeinrichtung darstellbares Menü mittels eines Fingerzeigs eines Fingers der rechten und der linken Hand durchzuschalten.

Beispielsweise kann mittels eines Fingerzeigs eines Fingers der linken Hand das Menü eine Position zurückspringen, wohingegen es mittels eines Fingerzeigs eines Fingers der rechen Hand um eine Position nach vorne springen kann. Eine solche Veränderung der Anzeige auf der Anzeigeeinrichtung ist von dem Fahrer kognitiv leicht zuordenbar.

Eine Auswahl oder Aktivierung einer Menüposition kann dann beispielsweise mittels eines Fingerzeigs von zumindest zwei Fingern erfolgen, beispielsweise durch das Ausstrecken von zwei Fingern einer Hand, oder das gleichzeitige Ausstrecken der Zeigefinger beider Hände.

Auch wäre es denkbar, wenn das erfindungsgemäße System derart ausgebildet wird, dass beispielsweise durch das wiederholte, rasch aufeinander folgende Ausstrecken eines Fingers durch mehr Positionen eines Menü gescrollt werden kann, als dies bei einer gleichen Anzahl an Fingerbewegungen der Fall ist, wenn diese Bewegungen langsamer oder mit einem größeren zeitlichen Abstand erfolgen.

Wie aus dem oben Geschilderten ersichtlich ist, gibt es eine Vielzahl von Möglichkeiten dahin, welche Bewegungen (Ausstrecken, Beugen, V-förmiges Ausstrecken) welcher Finger (Zeigefinger, Mittelfinger) mit welcher Bewegungsfrequenz (rasch, langsam, einmalig) welcher Hand (linke Hand, rechte Hand) erfasst und ausgewertet werden können, und welche Steuerbefehle durch die verschiedenen Bewegungen und Bewegungsabläufe für welches Fahrzeugsystem erzeugt und übertragen werden. Das erfindungsgemäße System und das erfindungsgemäße Verfahren unterliegen in dieser Hinsicht keinen besonderen Beschränkungen, auch wenn eine für den Fahrer möglichst einfache Bedienung wünschenswert ist.

Um eine "driver distraction" so gering wie möglich zu halten, kann es gemäß einer bevorzugten Ausgestaltung vorgesehen sein, dass mittels rechtem und linkem Fingerzeig der Anzeigemodus eines Head-up-Displays durchgeschaltet werden kann. Dies ist, wie oben bereits erwähnt, zum einen kognitiv für den Fahrer gut zuordenbar, und zum anderen wird bei einer Anzeige mittels eines Head-up-Display der Fahrer nicht veranlasst, seinen Blick vom Fahrgeschehen abzuwenden, wie dies beispielsweise bei einer Anzeigeeinrichtung im Bereich der Mittelkonsole der Fall wäre.

Durch die vorliegende Erfindung wird eine Gestenbedienung von Fahrzeugsystemen durch einfaches Ausstrecken von beispielsweise einem Zeigefinger einer Hand möglich, während der Fahrer die Hände am Lenkradkranz hat. Diese Ausstreckbewegung wird über eine erste Sensoreinrichtung (zum Beispiel Kameraeinrichtung) erfasst, die beispielsweise auf der Lenksäule angeordnet sein kann. Wird durch die erste Sensoreinrichtung eine solche Bewegung erfasst, kann beispielsweise mittels linkem und rechtem Fingerzeig beispielsweise der Anzeigemodus eines Head-up-Displays durchgeschaltet werden, was kognitiv für den Fahrer gut zuordenbar ist.

Durch eine sich mit dem Lenkrad mitdrehende Fixierung der ersten Sensoreinrichtung kann die Eingaberobustheit, beispielsweise in lang gestreckten Kurven und bei nicht optimaler Handhaltung, zusätzlich erhöht werden.

Erfindungsgemäß ist im oder auf dem Lenkradkranz eine zweite Sensoreinrichtung vorgesehen, durch die erfasst werden kann, ob sich die Hände des Fahrers am Lenkradkranz befinden oder nicht.

## Patentansprüche

1. System zur Steuerung von zumindest einem Fahrzeugsystem mittels von einem Fahrer durchgeführter Gesten,
wobei das System
zumindest eine erste Sensoreinrichtung (1), deren Erfassungsbereich derart ausgestaltet Ist, dass durch ihn das Ausstrecken von zumindest einem Finger (2, 2') von zumindest einer sich am Lenkradkranz (3) eines Lenkrades befindlichen Hand (4, 4') eines Fahrers erfasst werden kann,
zumindest eine Auswertungseinrichtung, durch die die Bewegung[en] des zumindest einen Fingers (2, 2') ausgewertet werden kann/können, und
zumindest eine Steuereinrichtung, durch die ein Steuerbefehl für zumindest ein Fahrzeugsystem auf Grundlage der Auswertung durch die Auswertungseinrichtung erzeugt und an zumindest ein Fahrzeugsystem übertragen werden kann,
umfasst,
**dadurch gekennzeichnet, dass**
das System weiter zumindest eine zweite, im Bereich des Lenkradkranzes (3) angeordnete Sensoreinrichtung aufweist, mittels der erfasst werden kann, ob sich die zumindest eine Hand (4, 4') des Fahrers am Lenkradkranz befindet, und
der Steuerbefehl für zumindest ein Fahrzeugsystem durch die Steuereinrichtung nur erzeugt und an dieses übertragen wird, wenn mittels zumindest der zweiten, im Bereich des Lenkradkranzes angeordneten Sensoreinrichtung erfasst wird, dass sich die zumindest eine Hand des Fahrers am Lenkradkranz befindet.

2. System nach Anspruch 1,
**dadurch gekennzeichnet, dass**
die erste Sensoreinrichtung (1) zumindest eine Kameraeinrichtung umfasst.

3. System nach Anspruch 1 oder 2,
**dadurch gekennzeichnet, dass**
die erste Sensoreinrichtung (1) im Bereich der Lenksäule (5) oder des Armaturenbretts angeordnet ist.

4. System nach einem der vorhergehenden Ansprüche,
**dadurch gekennzeichnet, dass**
die erste Sensoreinrichtung (1) derart angeordnet ist, dass diese der Drehung des Lenkrads folgt.

5. Verfahren zur Steuerung von zumindest einem Fahrzeugsystem mittels von einem Fahrer durchgeführter Gesten,
wobei
mittels einer ersten Sensoreinrichtung, deren Erfassungsbereich derart ausgestaltet ist, dass durch ihn das Ausstrecken von zumindest einem Finger von zumindest einer sich am Lenkradkranz eines Lenkrades befindlichen Hand eines Fahrers erfasst werden kann, erfasst wird, ob ein Fahrer zumindest einen Finger einer sich am Lenkradkranz befindlichen Hand ausstreckt und gegebenenfalls wieder beugt,
für den Fall, dass der Fahrer zumindest einen Finger ausstreckt und gegebenenfalls wieder beugt,
durch eine Auswertungseinrichtung, durch die die Bewegung[en] des zumindest einen Fingers ausgewertet werden kann/können, die Bewegung[en] des zumindest einen Fingers des Fahrers ausgewertet wird/werden, und
durch eine Steuerungseinrichtung, durch die ein Steuerbefehl für ein Fahrzeugsystem auf Grundlage der Auswertung durch die Auswertungseinrichtung erzeugt und an das Fahrzeugsystem übertragen werden kann, ein Steuerbefehl für zumindest ein Fahrzeugsystem erzeugt und an dieses übertragen wird,
**dadurch gekennzeichnet, dass**
der Steuerbefehl für zumindest ein Fahrzeugsystem nur erzeugt und an dieses übertragen wird, wenn mittels zumindest einer zweiten, im Bereich des Lenkradkranzes angeordneten Sensoreinrichtung erfasst wird, dass sich die zumindest eine Hand des Fahrers am Lenkradkranz befindet.

6. Verfahren nach Anspruch 5,
**dadurch gekennzeichnet, dass**
das Fahrzeugsystem eine Anzeigeeinrichtung, eine Multimediaeinrichtung, eine Navigationseinrichtung, eine Fahrerassistenzeinrichtung, eine Kommunikationseinrichtung, oder eine Fahrzeugeinstelleinrichtung umfasst.

7. Verfahren nach Anspruch 5 oder 6,
**dadurch gekennzeichnet, dass**
das Fahrzeugsystem eine Anzeigeeinrichtung umfasst, und mittels eines Fingerzeigs eines Fingers der rechten oder eines Fingers der linken Hand ein von der Anzeigeeinrichtung darstellbares Menü durchgeschaltet werden kann.

8. Verfahren nach Anspruch 7,
**dadurch gekennzeichnet, dass**
mittels eines Fingerzeigs von zumindest zwei Fingern eine Menüoption ausgewählt oder aktiviert werden kann.

## Claims

1. System for controlling at least one motor vehicle system by means of gesture performed by a driver
wherein the system comprises
at least one first sensor device (1), the detection range of which is designed so that it can detect the stretching out of at least one finger (2, 2') of at least one hand (4, 4') of a driver placed on the steering wheel rim (3) of a steering wheel,
at least one evaluation unit, through which the movement(s) of the at least one finger (2, 2') can be evaluated,
at least one control device through which a control command for at least one motor vehicle system can be generated on the basis of the evaluation by the evaluation unit and can be transmitted to at least one motor vehicle system,
**characterised in that**
the system also comprises at least one second sensor device which is arranged in the area of the steering wheel rim (3) and by means of which it can be detected whether the at least one hand (4, 4') of the driver is placed on the steering wheel rim, and
the control command for at least one motor vehicle system is only generated by the control device and transmitted to the motor vehicle system if it is detected by at least the second sensor device, arranged in the area of the steering wheel rim, that the at least one hand of the driver is located on the steering wheel rim.

2. System according to claim 1
**characterised in that**
the first sensor device (1) comprises at least one camera device.

3. System according to claim 1 or 2
**characterised in that**
the first sensor device (1) is arranged in the area of the steering column (5) or the dashboard.

4. System according to any one of the preceding claims
**characterised in that**
the first sensor device (1) is arranged in such a way that it follows the rotation of the steering wheel.

5. Method of controlling at least one motor vehicle system by means of gestures performed by a driver
wherein
by means of a first sensor device, the detection range of which is designed so that it can detect the stretching out of at least one finger of at least one hand of a driver placed on the steering wheel rim of a steering wheel, it is detected whether a driver is extending at least one finger of a hand placed on the steering wheel rim, and is possibly bending it again, in the event that the driver is extending at least one finger, and possible bending it again, through an evaluation device, by means of which the movement(s) of the at least one finger can be evaluated, the movement(s) of the at least one finger of the driver is/are evaluated, and
through a control device, by means of which a control command for a motor vehicle system is generated on the basis of the evaluation by the evaluation device and can be transmitted to the motor vehicle system, a control command is generated for and transmitted to at least one motor vehicle system.
**characterised in that**
the control command for at least one motor vehicle system is only generated and sent thereto, if by means of at least a second sensor device arranged in the area of the steering wheel rim it is detected that the at least one hand of the driver is placed on the steering wheel rim.

6. Method according to claim 5
**characterised in that**
the motor vehicle system comprises a display device, a multimedia device, a navigation device, a driver assistance device, a communication device or a motor vehicle setting device.

7. Method according to claim 5 or 6
**characterised in that**
the motor vehicle system comprises a display device and by means of pointing a finger of the right hand or a finger of the left hand a menu shown by the display device can be perused

8. Method according to claim 7
**characterised in that**
by means of pointing at least two fingers a menu option can be selected or activated.

## Revendications

1. Système pour commander au moins un système de véhicule au moyen de gestes effectués par un conducteur,
dans lequel le système comprend
au moins un premier dispositif capteur (1) dont la zone de détection est conçue de telle sorte que le fait qu'au moins un doigt (2, 2') d'au moins une main (4, 4') d'un conducteur placée sur la jante (3) d'un volant se tende à travers cette zone de détection peut être détecté,
au moins un dispositif d'évaluation par lequel le ou les mouvements de l'au moins un doigt (2, 2') peuvent être évalués
et au moins un dispositif de commande par lequel une instruction de commande pour au moins un système de véhicule peut être produite sur la base de l'évaluation par le dispositif d'évaluation et peut être transmise à l'au moins un système de véhicule,
**caractérisé en ce que**
le système comporte aussi au moins un deuxième dispositif capteur qui est agencé dans la zone de la jante de volant (3) et au moyen duquel on peut détecter si l'au moins une main (4, 4') du conducteur est placée sur la jante de volant
et l'instruction de commande pour l'au moins un système de véhicule n'est produite par le dispositif de commande et transmise audit système de véhicule que si on a détecté au moyen du deuxième dispositif capteur, agencé dans la zone de la jante de volant, que l'au moins une main du conducteur est placée sur la jante de volant.

2. Système selon la revendication 1, **caractérisé en ce que** le premier dispositif capteur (1) comprend au moins un dispositif avec caméra.

3. Système selon la revendication 1 ou 2, **caractérisé en ce que** le premier dispositif capteur (1) est agencé dans la zone de la colonne de direction (5) ou du tableau de bord.

4. Système selon l'une des revendications précédentes, **caractérisé en ce que** le premier dispositif capteur (1) est agencé de telle sorte qu'il suit la rotation du volant.

5. Procédé pour commander au moins un système de véhicule au moyen de gestes effectués par un conducteur,
selon lequel
au moyen d'un premier dispositif capteur dont la zone de détection est conçue de telle sorte que le fait qu'au moins un doigt d'au moins une main d'un conducteur est placée sur la jante d'un volant se tende à travers cette zone de détection peut être détecté, on détecte si un conducteur tend au moins un doigt d'une main placée sur la jante de volant et le replie le cas échéant, dans le cas où le conducteur tend au moins un doigt et le replie le cas échéant,
avec un dispositif d'évaluation par lequel le ou les mouvements de l'au moins un doigt peuvent être évalués, on évalue le ou les mouvements de l'au moins un doigt du conducteur,
et, avec un dispositif de commande par lequel une instruction de commande pour un système de véhicule peut être produite sur la base de l'évaluation par le dispositif d'évaluation et peut être transmise à l'au moins un système de véhicule, on produit une instruction de commande pour l'au moins un système de véhicule et on la transmet à celui-ci,
**caractérisé en ce que**
on ne produit l'instruction de commande pour l'au moins un système de véhicule et on ne la transmet que si on a détecté au moyen d'au moins un deuxième dispositif de capteur, agencé dans la zone de la jante de volant, que l'au moins une main du conducteur est placée sur la jante de volant.

6. Procédé selon la revendication 5, **caractérisé en ce que** le système de véhicule comprend un dispositif d'affichage, un dispositif multimédia, un dispositif de navigation, un dispositif d'assistance au conducteur, un dispositif de communication ou un dispositif de réglage de véhicule.

7. Procédé selon la revendication 5 ou 6, **caractérisé en ce que** le système de véhicule comprend un dispositif d'affichage et **en ce qu'**un menu pouvant être présenté par le dispositif d'affichage peut être commuté au moyen d'un pointage d'un doigt de la main droite ou de la main gauche.

8. Procédé selon la revendication 7, **caractérisé en ce qu'**une option de menu peut être sélectionnée ou activée au moyen d'un pointage d'au moins deux doigts.
